# FASCICULE DE BREVET EUROPEEN

(11) **EP 4 005 262 B1**
(45) Date de publication et mention de la délivrance du brevet: **26.08.2026**
(21) Numéro de dépôt: 20750319.4
(22) Date de dépôt: 07.07.2020
(51) Int. Cl.: H04W 12/069, G06F 21/62, G07C 5/00

(54) **SYSTÈME ET PROCÉDÉ DE SÉCURISATION D'UNE REQUÊTE DE DIAGNOSTIC À UN CALCULATEUR DE VÉHICULE AUTOMOBILE**
SYSTEM UND VERFAHREN ZUR SICHERUNG EINER DIAGNOSEANFRAGE AN EINEM KRAFTFAHRZEUGCOMPUTER
SYSTEM AND METHOD FOR SECURING A DIAGNOSTIC REQUEST TO A MOTOR VEHICLE COMPUTER

(30) Priorité: 30.07.2019 FR 1908637
(43) Date de publication de la demande: 01.06.2022
(73) Titulaire: Stellantis Auto SAS, 78300 Poissy (FR)
(72) Inventeur: TISON, Pascal, 92160 Antony (FR); GARDIN BALAY, Beatrice, 78140 Velizy Villacoublay (FR); LE BOBINNEC, Yves Emmanuel, 78310 Maurepas (FR)
(74) Mandataire: ESIP
(86) Numéro de dépôt international: PCT/FR2020/051199
(87) Numéro de publication internationale: WO 2021/019138

(56) Documents cités:
- US-A1- 2016 035 147
- US-A1- 2017 093 866
- S.BAYER ET AL: "OBD = Open Barn Door? Security Vulnerabilities and Protections for Vehicular OBD Interfaces", 10. IAV SYMPOSIUM F?R STEUERUNGSSYSTEME, 11 November 2014 (2014-11-11), Berlin, Germany, XP055258960, Retrieved from the Internet <URL:https://www.escrypt.com/fileadmin/escrypt/pdf/Whitepaper/OBD_Open_Barn_Door_Security_Vulnerabilities_and_Protections_for_Vehicular_On_Board_Diagnosis.pdf> [retrieved on 20160316]

## Description

La présente invention concerne de manière générale un système et un procédé de sécurisation d'une requête de diagnostic à un calculateur de véhicule automobile. Le document US 2016035147 divulgue un système de diagnostic de véhicule permettant d'établir une session de diagnostic sécurisée.

La communication entre un calculateur de véhicule automobile et un outil de diagnostic déporté utilise un protocole de communication, Services de diagnostic unifiés ou en anglais, Unified Diagnostic Services (UDS), spécifié dans la norme ISO 14229-1 et dérivé des normes ISO 14230-3 et ISO 15765-3. Il s'agit d'une norme internationale et non d'une norme propre à un constructeur. Ce protocole de communication est utilisé dans presque tous les nouveaux calculateurs fabriqués par les fournisseurs des équipementiers d'origine des constructeurs automobiles. Les calculateurs d'un véhicule contrôlent un large éventail de fonctions dans les véhicules, notamment l'injection électronique de carburant, la commande du moteur, la transmission, le système de freinage antiblocage, le verrouillage des portières, le freinage, etc. L'accès au calculateur doit donc être sécurisé.

L'outil de diagnostic peut communiquer avec toutes les unités de commande installées dans un véhicule dont les services de diagnostic unifiés (UDS) sont activés. Les véhicules modernes disposent d'une interface de diagnostic pour le diagnostic débarqué, qui permet de connecter un ordinateur ou un outil de diagnostic, au système bus du véhicule sur lequel sont connectés tous les calculateurs du véhicule. Ainsi, les messages définis dans la norme des services de diagnostic unifiés (UDS) peuvent être envoyés aux contrôleurs qui doivent fournir les services de diagnostic unifiés (UDS) prédéterminés. Il est ainsi possible d'interroger la mémoire de défauts des différentes unités de commande ou de les mettre à jour à l'aide d'un nouveau logiciel de système d'exploitation (en anglais : firmware).

Chaque constructeur automobile est responsable d'implémenter un mécanisme d'accès sécurisé selon la norme des services de diagnostic unifiés (UDS).

Un but de la présente invention est de proposer un procédé de sécurisation d'une requête de diagnostic à un calculateur de véhicule automobile permettant de répondre aux différents niveaux de sécurité requis et cas d'utilisation des outils de diagnostic.

Pour cela, un premier aspect de l'invention concerne un système de sécurisation d'une requête de diagnostic pour un calculateur de véhicule automobile, le calculateur de véhicule automobile comprenant, un élément de connexion diagnostic agencé pour recevoir une connexion avec un outil de diagnostic, une mémoire embarquée de stockage, l'outil de diagnostic comprenant une première mémoire de stockage sur laquelle est installé un programme d'ordinateur susceptible d'accéder au calculateur pour modifier au moins un paramètre de fonctionnement, une fois l'outil de diagnostic connecté au connecteur diagnostic, un dispositif de communication apte à se connecter à un serveur distant, une deuxième mémoire de stockage installée sur le serveur distant, caractérisé en ce que la mémoire embarquée de stockage du calculateur de véhicule automobile comprend une première clé de verrouillage et une deuxième clé de verrouillage, la première mémoire de stockage de l'outil de diagnostic comprend une première clé de stockage agencée pour déverrouiller la première clé de verrouillage, la deuxième mémoire de stockage du serveur distant comprend une deuxième clé de stockage agencée pour déverrouiller la deuxième clé de verrouillage, de sorte à ce que le calculateur puisse contrôler l'accès par l'outil de diagnostic lors d'une requête de diagnostic.

Selon une variante de réalisation, la première clé de verrouillage est identique pour tous les calculateurs d'un groupe déterminé de calculateurs.

Selon une variante de réalisation, la deuxième clé de verrouillage est unique pour chaque calculateur.

Un deuxième aspect de l'invention concerne un procédé de sécurisation d'une requête de diagnostic pour un système selon le premier aspect caractérisé en ce qu'il comprend une étape de comparaison par le calculateur du véhicule automobile de la première clé de verrouillage mémorisée dans la mémoire de stockage du calculateur avec la première clé de stockage mémorisée dans la mémoire de stockage de l'outils de diagnostic, une étape d'envoi d'une requête de modification ou d'accès à au moins un paramètre de fonctionnement du calculateur par l'outil de diagnostic si les deux premières clés de verrouillage et de stockage sont identiques.

Selon une variante de réalisation, le procédé de sécurisation comprend une étape de comparaison par le calculateur du véhicule automobile de la deuxième clé de verrouillage mémorisée dans la mémoire de stockage du calculateur avec la deuxième clé de stockage mémorisée dans la mémoire de stockage du serveur distant, une étape d'envoi d'une requête de modification ou d'accès à au moins un paramètre de fonctionnement du calculateur par l'outil de diagnostic si les deux deuxièmes clés de verrouillage et de stockage sont identiques.

Selon une variante de réalisation, le procédé de sécurisation comprend une étape d'interdiction de l'étape de comparaison par le calculateur du véhicule automobile de la première clé de verrouillage mémorisée dans la mémoire de stockage du calculateur avec la première clé de stockage mémorisée dans la mémoire de stockage de l'outils de diagnostic, l'étape d'interdiction étant déclenchée soit lors de l'envoi par l'outil de diagnostic d'une requête de diagnostic déterminée, soit lorsque le véhicule automobile a parcouru une distance déterminée.

.Un troisième aspect de l'invention concerne un système informatique de sécurisation d'une requête de diagnostic pour un calculateur de véhicule automobile, caractérisé en ce qu'il comprend des moyens de mise en œuvre des étapes du procédé selon le deuxième aspect.

Un quatrième aspect de l'invention concerne un programme d'ordinateur comportant des instructions pour mettre en œuvre le procédé de sécurisation d'une requête de diagnostic pour un calculateur de véhicule automobile selon le deuxième aspect, lorsqu'il est exécuté sur un ou plusieurs processeurs.

D'autres caractéristiques et avantages de la présente invention apparaîtront plus clairement à la lecture de la description détaillée qui suit d'un mode de réalisation de l'invention donné à titre d'exemple nullement limitatif.

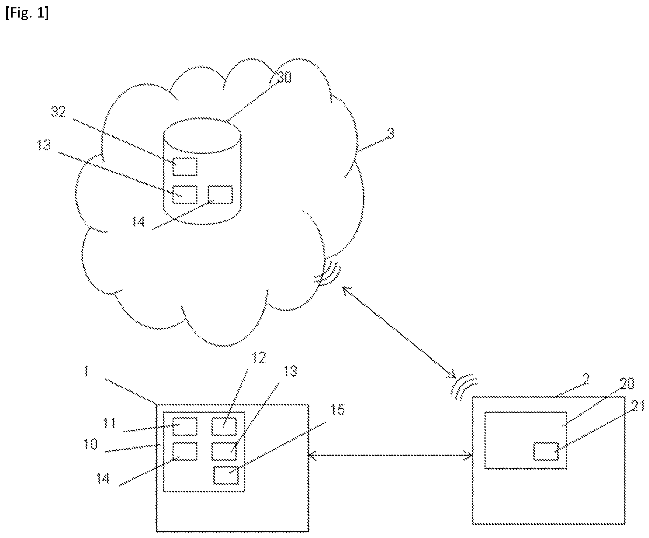

[fig. 1] représente une vue schématique du système de sécurisation d'une requête de diagnostic pour un calculateur de véhicule automobile selon l'invention.

De manière connue en soi, un véhicule automobile comprend plusieurs calculateurs 1. Ces calculateurs permettent le fonctionnement du véhicule notamment le contrôle moteur, la commande des dispositifs de l'habitacle tel que la climatisation l'éclairage, la conduite du véhicule tel que le système de freinage, les systèmes actifs et passifs de sécurité etc... l'ensemble de ces calculateurs est connecté à un réseau de communication ou bus de données.

Chaque calculateur 1 comprend une mémoire embarquée 10 permettant de stocker notamment un logiciel permettant de faire fonctionner le calculateur 1, les données reçues par le calculateur et des données relatives au véhicule ou au calculateur 1. A titre d'exemple, lorsqu'il est installé sur un véhicule, la mémoire embarquée 10 d'un calculateur 1 peut comprendre le numéro de série 13 du calculateur et/ou le numéro d'identification 14 du véhicule.

Afin de vérifier le bon fonctionnement des calculateurs ou les paramétrer ou les mettre à jour, le réseau de communication comprend un connecteur diagnostic agencé pour recevoir la connexion d'un outil de diagnostic 2 de sorte que l'outil de diagnostic 2 puisse transmettre et recevoir des données au/du calculateur 1. L'outil de diagnostic est en quelque sorte un ordinateur comprenant une mémoire de stockage 20 sur laquelle est enregistré un programme d'ordinateur permettant d'accéder au calculateur 1 via le connecteur diagnostic. L'outil de diagnostic 2 comprend de façon connue en soi une interface homme machine (non représentée).

L'outil de diagnostic 2 peut également comprendre un dispositif de communication apte à se connecter à un serveur distant 3. Le dispositif de communication est connu en soi. Il peut s'agir d'un module de connexion WIFI ou filaire. Le serveur distant dispose également d'une deuxième mémoire de stockage 30. Le serveur distant 3 est un serveur appartenant ou pour le moins donc l'accès est contrôlé par le constructeur automobile du véhicule. Il comprend notamment des informations relatives à l'identification de véhicule du constructeur notamment via le numéro d'identification du véhicule.

Comme expliqué précédemment, dans la mesure où le ou les calculateurs 1 commandent plusieurs éléments sensibles du véhicule, les échanges de données entre le ou les calculateurs 1 et l'outil de diagnostic 2 doivent être sécurisés en utilisant la norme des Services de diagnostic unifiés ou en anglais, Unified Diagnostic Services (UDS). En effet, l'accès au calculateur ne peut se faire que via un outil de diagnostic autorisé ou vérifié.

Par ailleurs, lors de l'assemblage du véhicule le ou les calculateurs doivent être par exemple paramétrés. Ce paramétrage s'effectue également par l'intermédiaire d'un outil de diagnostic 2. Pour les mêmes raisons, l'accès au calculateur 1 lors de la fabrication du véhicule ne peut se faire que via un outil de diagnostic autorisé ou vérifié. Toutefois, lors de la fabrication l'accès au calculateur est moins exposé puisque le véhicule est sur un site de fabrication d'un constructeur.

Selon l'invention et pour tenir compte des différents cycles de vie du véhicule, le système de sécurisation d'une requête de diagnostic à un calculateur de véhicule automobile selon l'invention comprend une première clé de verrouillage 11 et une deuxième clé de verrouillage 12 mémorisée sur la mémoire embarquée 10 du calculateur 1. Une première clé de stockage 21 correspondante est mémorisée sur la première mémoire de stockage 20 de l'outil de diagnostic 2. Une deuxième clé de stockage 32 correspondante est mémorisée sur la deuxième mémoire de stockage 30 du serveur distant 3.

La première clé de verrouillage 11 et la première clé de stockage 21 dite commune est identique pour un groupe déterminité de calculateurs. Par exemple, la clé commune 11 est identique pour tous les calculateurs du même type (par exemple contrôle moteur) et de la même version (par exemple pour une gamme de véhicule pour un millésime donné). On comprend que la première mémoire de stockage 20 de l'outil de diagnostic 2 peut comprendre plusieurs clés communes 21 différentes alors que le calculateur 1 ne comprend d'une seule clé commune 11.

On comprend également que lors de la phase fabrication, l'envoi d'une requête de diagnostic pour l'outil de diagnostic 2 est précédé d'une comparaison par le calculateur 1 entre les clés communes 11, 21 présentent d'une part sur le calculateur 1 et d'autre part sur l'outil de diagnostic. Si la clé commune 11 présente sur le calculateur 1 correspond à l'une des clés communes 21 présentent sur l'outil de diagnostic, alors la requête de diagnostic est autorisée.

On comprend que l'accès au calculateur 1 via l'outil de diagnostic 2 peut être réalisé sans qu'un accès au serveur distant 3 ne soit nécessaire. Cependant, dans le cadre des opérations d'assemblage du véhicule, la sécurité du calculateur 1 est peu exposée puisqu'il se trouve dans l'enceinte d'une usine du constructeur automobile. A la fin du processus de fabrication, le numéro d'identification du véhicule 14 est connu. Celui-ci est mémorisé dans le calculateur 1 par exemple via une requête de diagnostic de l'outil de diagnostic 2. De même, le numéro d'identification du véhicule est lié d'une part au numéro de série du calculateur 13 et d'autre part à la deuxième clé 12 de verrouillage dite unique. L'information concernant l'association entre la clé unique 12, le numéro d'identification du véhicule 14 et le numéro de série du calculateur 13 est mémorisé sur la deuxième mémoire de stockage du serveur distant 3.

A l'issue de la fabrication du véhicule, celui-ci entre dans une phase de distribution. Lors de cette phase, le véhicule n'est pas encore affecté à un utilisateur final. Il peut être en attente de livraison ou en cours de livraison. Là encore, l'environnement du véhicule est contrôlé par le constructeur, par conséquent, le niveau d'exposition de la sécurité du calculateur est faible. Pendant, cette phase de distribution, si une requête de diagnostic devait être envoyée par un outil de diagnostic 2, une vérification de la conformité de la clé commune 11 ou de la clé unique 12 serait réalisée.

La vérification de la clé unique 12 nécessite l'accès par l'outil de diagnostic 2 au serveur distant 3. Cette vérification s'effectue de la façon suivante. L'outil de diagnostic 2 lit dans un premier temps le numéro de série du calculateur 13 et le numéro d'identification du véhicule 14 stockés sur la mémoire embarquée du calculateur 1 du véhicule. Le numéro de série du calculateur 13 et le numéro d'identification du véhicule 14 sont ensuite transmis par l'outil de diagnostic 2 au serveur distant pour obtenir la valeur de la clé unique correspondante 32 et mémorisée sur la deuxième mémoire de stockage du serveur distant.

La valeur de la clé unique 32 envoyée par le serveur distant 3 à l'outil de diagnostic est alors comparée par le calculateur 1 à la valeur de la clé unique 12 mémorisé sur la mémoire embarquée 10 du calculateur 1. Si les deux valeurs sont identiques, la requête de diagnostic envoyée au calculateur 1 par l'outil de diagnostic est autorisée.

Dès que le véhicule est affecté et livré à un client final, l'environnement du véhicule n'est plus contrôlé par le constructeur. Il est donc nécessaire d'augmenter la sécurité de connexion au calculateur 1 du véhicule. Par conséquent, à l'issue de la fabrication et avant la livraison au client final, l'utilisation de la clé commune mémorisée 11 sur le calculateur est neutralisé de façon irréversible de sorte que pour chaque requête de diagnostic transmis par un outil de diagnostic 2 soit précédé uniquement de la vérification de la correspondance de la clé unique avec par conséquent, nécessité d'accéder au serveur distant 3.

Pour ce faire, le calculateur 1 comprend une zone 15 de la mémoire embarquée 10 modifiable une seule fois. Cette zone 15 de la mémoire est lue le calculateur 1. Selon la valeur inscrite dans cette zone 15, le calculateur 1 procèdera soit à la comparaison de l'une ou l'autre de la clé commune ou de la clé unique soit uniquement à la comparaison de la clé unique. A l'état initial, c'est-à-dire lors de la fabrication du calculateur 1, la valeur inscrite dans la zone 15 correspond à une vérification de la clé commune ou de la clé unique.

A la fin du processus de fabrication et avant la livraison du véhicule au client final la valeur de la zone 15 est modifiée de façon irréversible dans la mémoire embarquée 10 du calculateur 1. La nouvelle valeur inscrite dans la zone 15 correspond alors à une vérification de la clé unique uniquement avant l'exécution d'une requête de diagnostic envoyée par un outil de diagnostic.

On comprend que la modification de la zone 15 spécifique de la mémoire embarquée 10 du calculateur 1 interdit de façon définitive l'utilisation de la clé commune pour autoriser l'exécution d'une requête de diagnostic transmise par un outil de diagnostic 2.

La modification de la zone 15 spécifique de la mémoire embarquée peut être est réalisée de 2 façons :
soit via une requête de diagnostic spécifique envoyée, après authentification par exemple de la clé commune, par un outil de diagnostic,
soit par le programme d'ordinateur du calculateur lui-même après que ce dernier ait détecté que le véhicule a parcouru une distance déterminée par exemple de l'ordre de quelques kilomètres à un millier de kilomètres.

## Revendications

1. Système de sécurisation d'une requête de diagnostic pour un calculateur (1) de véhicule automobile, :
• le calculateur de véhicule (1) automobile comprenant :
- un élément de connexion diagnostic agencé pour recevoir une connexion avec un outil de diagnostic (2),
- une mémoire embarquée de stockage (10),
• l'outil de diagnostic (2) comprenant :
- une première mémoire de stockage (20) sur laquelle est installé un programme d'ordinateur susceptible d'accéder au calculateur (1) pour modifier au moins un paramètre de fonctionnement, une fois l'outil de diagnostic (2) connecté au connecteur diagnostic,
• un dispositif de communication apte à se connecter à un serveur distant (3),
• une deuxième mémoire de stockage (30) installée sur le serveur (3) distant
**caractérisé en ce que** :
la mémoire embarquée de stockage (10) du calculateur de véhicule automobile comprend une première clé de verrouillage (11) qui est identique pour tous les calculateurs d'un groupe déterminé de calculateurs, et une deuxième clé de verrouillage (12),
la première mémoire de stockage (20) de l'outil de diagnostic comprend une première clé de stockage (21) identique à la première clé de verrouillage (11), la deuxième mémoire de stockage (30) du serveur distant (3) comprend une deuxième clé de stockage (32) identique à la deuxième clé de verrouillage (12), la deuxième clé de stockage (32) étant associée de manière unique à un numéro d'identification du véhicule (14) et à un numéro de série du calculateur (13) dans la deuxième mémoire de stockage (30), de sorte à ce que le calculateur puisse contrôler l'accès par l'outil de diagnostic lors d'une requête de diagnostic,
**caractérisé en ce que** ledit système est agencé pour interdire une étape de comparaison par le calculateur (1) du véhicule automobile de la première clé de verrouillage mémorisée (11) dans la mémoire de stockage (10) du calculateur (1) avec la première clé de stockage (21) mémorisé dans la mémoire de stockage (20) de l'outils de diagnostic (2)
- ladite interdiction étant déclenchée soit lors de l'envoi par l'outil de diagnostic d'une requête de diagnostic déterminée, soit lorsque le véhicule automobile a parcouru une distance déterminée.

2. Système de sécurisation d'une requête de diagnostic pour un calculateur de véhicule automobile selon la revendication 1 dans lequel la deuxième clé de verrouillage (12) est unique pour chaque calculateur.

3. Procédé de sécurisation d'une requête de diagnostic pour un système selon l'une des revendications 1 ou 2 **caractérisé en ce qu'**il comprend **:**
une étape d'interdiction, lors de l'envoi par l'outil de diagnostic (2) d'une requête de diagnostic déterminée, soit lorsque le véhicule automobile a parcouru une distance déterminée, de l'étape de comparaison par le calculateur (1) du véhicule automobile de la première clé de verrouillage (11) mémorisée dans la mémoire de stockage (10) du calculateur (1) avec la première clé de stockage (21) mémorisée dans la mémoire de stockage (20) de l'outil de diagnostic (2);
lorsque la comparaison est autorisée:
- une étape de comparaison par le calculateur (1) du véhicule automobile de la première clé de verrouillage (11) mémorisée dans la mémoire de stockage (10) du calculateur (1) avec la première clé (21) de stockage mémorisée dans la mémoire de stockage (20) de l'outils de diagnostic, la première clé de verrouillage (11) étant identique pour tous les calculateurs d'un groupe déterminé de calculateurs
- une étape d'envoi d'une requête de modification ou d'accès à d'au moins un paramètre de fonctionnement du calculateur par l'outil de diagnostic si les deux premières clés de verrouillage et de stockage sont identiques
- lecture, par l'outil de diagnostic (2), du numéro de série du calculateur (13) et du numéro d'identification du véhicule (14) stockés sur la mémoire embarquée de stockage (1) du véhicule, et transmission du numéro de série du calculateur et du numéro d'identification du véhicule, par l'outil de diagnostic, au serveur distant, pour obtenir la valeur de la deuxième clef de stockage (32) correspondante mémorisée sur la deuxième mémoire de stockage du serveur distant **;**
- une étape de comparaison par le calculateur (1) du véhicule automobile de la deuxième clé de verrouillage (12) mémorisée dans la mémoire de stockage du calculateur avec la deuxième clé de stockage (32) mémorisé dans la mémoire de stockage (30) du serveur distant (3)
- une étape d'envoi d'une requête de modification d'au moins un paramètre de fonctionnement du calculateur par l'outil de diagnostic si les deux deuxièmes clés de verrouillage et de stockage sont identiques.

4. Programme d'ordinateur comportant des instructions pour mettre en œuvre le procédé de sécurisation d'une requête de diagnostic pour un calculateur de véhicule automobile selon la revendication 3, lorsqu'il est exécuté sur un ou plusieurs processeurs.

## Patentansprüche

1. System zum Sichern einer Diagnoseanforderung für einen Kraftfahrzeug-Rechner (1) :
• Der Kraftfahrzeug-Rechner (1) umfasst:
- ein Diagnoseanschlusselement, das zum Empfangen einer Verbindung mit einem Diagnosewerkzeug (2) eingerichtet ist,
- einen On-Board-Speicher (10),
• Das Diagnosewerkzeug (2) umfasst:
- einen ersten Speicherspeicher (20), auf dem ein Computerprogramm installiert ist, das auf den Rechner (1) zugreifen kann, um wenigstens einen Betriebsparameter zu ändern, nachdem das Diagnosewerkzeug (2) mit dem Diagnoseanschluss verbunden ist,
• eine Kommunikationsvorrichtung, die geeignet ist Verbindung mit einem entfernten Server (3),
• einem zweiten Speicherspeicher (30), der auf dem entfernten Server (3) installiert ist, **dadurch gekennzeichnet, dass**
der eingebettete Speicherspeicher (10) des Kraftfahrzeugrechners einen ersten Verriegelungsschlüssel (11) aufweist, der für alle Rechner einer bestimmten Gruppe von Rechnern identisch ist, und einen zweiten Verriegelungsschlüssel (12), wobei
der erste Speicherspeicher (20) des Diagnosewerkzeugs einen ersten Speicherschlüssel (21) aufweist, der mit dem ersten Verriegelungsschlüssel (11) identisch ist, wobei der zweite Speicherspeicher (30) des entfernten Servers (3) einen zweiten Speicherschlüssel (32) aufweist, der mit dem zweiten Verriegelungsschlüssel (12) identisch ist, wobei der zweite Speicherschlüssel (32) einer Identifikationsnummer des Fahrzeugs (14) und einer Seriennummer des Rechners (13) im zweiten Speicherspeicher (30) eindeutig zugeordnet ist, sodass der Rechner den Zugriff durch das Diagnosewerkzeug bei einer Diagnoseanforderung steuern kann, **dadurch gekennzeichnet, dass** das System eingerichtet ist, einen Vergleichsschritt durch den Rechner (1) des Fahrzeugschlüssels des ersten zu verriegelnden Fahrzeugs zu verbieten im Speicher (10) des Rechners (1) abgelegt ist, wobei der erste Speicherschlüssel (21) im Speicher (20) des Diagnosewerkzeugs (2) abgelegt ist - wobei das Verbot ausgelöst wird, wenn das Diagnosewerkzeug eine bestimmte Diagnoseanforderung sendet oder wenn das Kraftfahrzeug eine bestimmte Strecke zurückgelegt hat.

2. System zum Sichern einer Diagnoseanforderung für einen Kraftfahrzeugrechner nach Anspruch 1, wobei der zweite Verriegelungsschlüssel (12) für jeden Rechner eindeutig ist.

3. Verfahren zur Sicherung einer Diagnoseanforderung für ein System nach einem der Ansprüche 1 oder 2, **dadurch gekennzeichnet, dass** es umfasst:
einen Sperrschritt beim Senden einer bestimmten Diagnoseanforderung durch das Diagnosewerkzeug (2), d. h. wenn das Kraftfahrzeug eine bestimmte Strecke zurückgelegt hat, des Vergleichsschritts durch den Kraftfahrzeug-Rechner (1) des im Speicher (20) des Diagnosewerkzeugs (2) gespeicherten ersten Verriegelungsschlüssels (11);
wenn der Vergleich zulässig ist:
- einen Schritt des Vergleichens des im Speicherspeicher (10) des Rechners (1) gespeicherten ersten Verriegelungsschlüssels (11) durch den Kraftfahrzeugrechner (1) mit dem im Speicherspeicher (20) des Diagnosewerkzeugs gespeicherten ersten Speicherschlüssel (21), wobei der erste Verriegelungsschlüssel (11) für alle Rechner einer bestimmten Gruppe von Rechnern
identisch ist - einen Schritt des Sendens einer Anforderung einer Änderung oder des Zugriffs auf mindestens einen Betriebsparameter des Rechners durch das Diagnosewerkzeug, wenn die beiden ersten Verriegelungsschlüssel und Speicher sind identisch
- Auslesen der Seriennummer des Rechners (13) und der Fahrzeugidentifikationsnummer (14) im Fahrzeugspeicher (1) durch das Diagnosewerkzeug (2) und Übertragen der Seriennummer des Rechners und der Fahrzeugidentifikationsnummer durch das Diagnosewerkzeug an den entfernten Server, um den Wert des entsprechenden zweiten Speicherschlüssels (32) zu erhalten, der im zweiten Speicherspeicher des entfernten Servers gespeichert ist;
- einen Schritt des Vergleichs des im Speicherspeicher des Rechners gespeicherten zweiten Verriegelungsschlüssels (12) durch den Kraftfahrzeugrechner (1) mit dem im Speicherspeicher (30) des entfernten Servers (3)
gespeicherten zweiten Speicherschlüssel (32) - einen Schritt des Sendens einer Anfrage zur Änderung mindestens eines Betriebsparameters des Rechners durch das Diagnosewerkzeug, wenn die beiden zweiten Verriegelungs- und Speicherschlüssel identisch sind.

4. Computerprogramm mit Anweisungen zum Durchführen des Verfahrens zum Sichern einer Diagnoseanforderung für einen Kraftfahrzeugrechner nach Anspruch 3, wenn es auf einem oder mehreren Prozessoren ausgeführt wird.

## Claims

1. System for security mode a diagnostic request for a motor vehicle computer (1):
• the motor vehicle computer (1) comprising:
- a diagnostic connection item arranged to receive a connection with a diagnostic tool (2),
- an on-board storage memory (10),
• the diagnostic tool (2) comprising:
- a first storage memory (20) on which is installed a computer plan capable of accessing the computer (1) to modify at least one operating parameter, once the diagnostic tool (2) is connected to the diagnostic connector,
• a communication device capable of connecting to a remote server (3),
• a second storage memory (30) installed on the remote server (3), wherein:
the on-board storage memory (10) of the first motor vehicle computer comprises locking (11) which is identical for all the computers of a determined group of computers, and a second locking key (12),
the first storage memory (20) of the diagnostic tool comprises a first storage key (21) identical to the first locking key (11), the second storage memory (30) of the remote server (3) comprises a second storage key (32) identical to the second locking key (12), the second storage key (32) being uniquely associated with a vehicle identification number (14) and with a serial number of the computer (13) in the second storage memory (30), wherein the computer can control access by the diagnostic tool during a diagnostic request, wherein The system is arranged to prevent a step of comparison by the computer (1) of the motor vehicle of the first locking key (11) stored in the storage memory (10) of the computer (1) with the first storage key (21) stored in the storage memory (20) of the diagnostic tool (2).

2. System for security mode a diagnostic request for a motor vehicle computer according to claim 1, wherein the second locking wrench (12) is unique for each computer.

3. Method of security mode a diagnostic request for a system according to claim 1 or 2, wherein the method comprises:
step of prohibiting, when the diagnostic tool (2) sends a determined diagnostic request, i.e. when the motor vehicle has travelled a determined distance, the step of comparing by the computer (1) of the motor vehicle the first locking key (11) stored in the storage memory (20) of the diagnostic tool (2);
when the comparing is permitted:
- a step of comparing by the motor vehicle computer (1) the first locking key (11) stored in the storage memory (10) of the computer (1) with the first storage key (21) stored in the storage memory (20) of the diagnostic tool, the first locking key (11) being identical for all the computers of a determined group of computers
- a step of sending a request to modify or access at least one operating parameter of the computer by the diagnostic tool if the first two locking and storage keys are identical
- reading, by the diagnostic tool (2), of the serial number of the computer (13) and of the vehicle identification number (14) stored on the vehicle onboard storage memory (1), and transmission of the serial number of the computer and of the vehicle identification number, by the diagnostic tool, to the remote server, in order to obtain the value of the corresponding second storage key (32) stored on the second storage memory of the remote server;
- step of comparing by the motor vehicle computer (1) the second locking key (12) stored in the storage memory of the computer with the second storage key (32) stored in the storage memory (30) of the remote server (3)
- step of sending a request to modify at least one operating parameter of the computer by the diagnostic tool if the two second locking and storage keys are identical.

4. Computer plan comprising instructions for implementing the method for security mode a diagnostic request for a motor vehicle computer according to claim 3, when it is executed on one or more processors.
